# EUROPEAN PATENT SPECIFICATION

(11) **EP 2 990 106 B1**
(45) Date of publication and mention of the grant of the patent: **28.02.2018**
(21) Application number: 14788573.5
(22) Date of filing: 14.04.2014
(51) Int. Cl.: H01M 4/92, H01M 4/90

(54) **ELECTRODE CATALYST LAYER USING CATALYST, MEMBRANE ELECTRODE ASSEMBLY, AND FUEL CELL**
ELEKTRODENKATALYSATORSCHICHT UNTER VERWENDUNG EINES KATALYSATORS, MEMBRANELEKTRODENANORDNUNG UND BRENNSTOFFZELLE
COUCHE DE CATALYSEUR D'ÉLECTRODE AYANT UN CATALYSEUR, ENSEMBLE ÉLECTRODE-MEMBRANE, ET PILE À COMBUSTILE

(30) Priority: 25.04.2013 JP 2013092940
(43) Date of publication of application: 02.03.2016
(73) Proprietor: NISSAN MOTOR CO., LTD., Yokohama-shi, Kanagawa 220-8623 (JP)
(72) Inventor: MASHIO, Tetsuya, Atsugi-shi Kanagawa 243-0123 (JP); FURUYA, Yoshihisa, Atsugi-shi Kanagawa 243-0123 (JP); AKIZUKI, Ken, Atsugi-shi Kanagawa 243-0123 (JP); OHMA, Atsushi, Atsugi-shi Kanagawa 243-0123 (JP)
(74) Representative: Grünecker Patent- und Rechtsanwälte PartG mbB
(86) International application number: PCT/JP2014/060647
(87) International publication number: WO 2014/175107

(56) References cited:
- WO-A1-2005/028719
- WO-A1-2006/070635
- WO-A1-2010/143311
- GB-A- 2 242 203
- JP-A- H09 167 622
- JP-A- 2006 008 472
- JP-A- 2006 272 324
- JP-A- 2007 137 754
- JP-A- 2008 036 451
- JP-A- 2008 290 062
- JP-A- 2008 311 055
- JP-A- 2012 000 566
- US-A1- 2008 207 442
- David Thompsett: "Catalysts for the Proton Exchange Membrane Fuel Cell", Fuel Cell Technology Handbook, 1 January 2003 (2003-01-01), pages 1-23, XP055170946, DOI: 10.1201/9781420041552.ch6 ISBN: 978-0-84-930877-2 Retrieved from the Internet: URL:http://www.crcnetbase.com/doi/pdfplus/ 10.1201/9781420041552.ch6 [retrieved on 2015-02-19]
- ANTOLINI ET AL: "Carbon supports for low-temperature fuel cell catalysts", APPLIED CATALYSIS B: ENVIRONMENTAL, ELSEVIER, AMSTERDAM, NL, vol. 88, no. 1-2, 29 April 2009 (2009-04-29), pages 1-24, XP026035683, ISSN: 0926-3373, DOI: 10.1016/J.APCATB.2008.09.030 [retrieved on 2008-10-09]
- Xiaoming Ren ET AL: "Oxygen reduction reaction catalyst on lithium/air battery discharge performance", Journal of Materials Chemistry, vol. 21, no. 27, 1 January 2011 (2011-01-01), pages 10118-10125, XP055210034, ISSN: 0959-9428, DOI: 10.1039/c0jm04170j

## Description

### Technical Field

The present invention relates to an electrode catalyst layer for a fuel cell (PEFC), a membrane electrode assembly, and a fuel cell using the electrode catalyst layer.

### Background Art

A polymer electrolyte fuel cell using a proton conductive solid polymer membrane operates at a low temperature in comparison to other types of fuel cells, for example, a solid oxide fuel cell or a molten carbonate fuel cell. For this reason, the polymer electrolyte fuel cell has been expected to be used as a power source for energy storage system or a driving power source for a vehicle such as a car, and practical uses thereof have been started.

In general, such a polymer electrolyte fuel cell uses expensive metal catalyst represented by platinum (Pt) or a Pt alloy, which leads to high cost of the fuel cell. Therefore, development of techniques capable of lowering the cost of the fuel cell by reducing a used amount of noble metal catalyst has been required.

In general, a catalyst used for a polymer electrolyte fuel cell has a form where catalyst metals are supported on a support such as carbon black. For example, Patent Literature 1 discloses a catalyst including fine carbon powder where a pore volume of pores having a diameter of 25 to 70 angstrom (2.5 to 7 nm) is 25% or more of a total pore volume and noble-metal particles which are highly dispersed on the fine carbon powder. In addition, Patent Literature 1 discloses that a specific surface area of the fine carbon powder constituting the catalyst is preferably 800 m²/g or more. In Patent Literature 2 to 4, further examples of Pt-based catalysts are disclosed which aim at enhanced catalytic activity by using carbon supports having large specific surface area. Patent Literature 5 discloses mesoporous carbon supports with improved surface resistance characteristics. Non-Patent Literature 1 discloses technological background information with respect to the constitution of PEFC catalysts.

### Citation List

### Patent Literature and Non-Patent Literature

Patent Literature 1: JP-A-6-196171
Patent Literature 2: US 2008/207442 A1
Patent Literature 3: WO 2010/143311 A1
Patent Literature 4: GB 2 242 203 A
Patent Literature 5: JP 2007-137754 A

Non-Patent Literature 1: D. Thompsett, Fuel Cell Technology Handbook, 2003, CRC Press LLC, p. 1-23.

### Summary of Invention

However, the present inventors have found that the catalyst disclosed in the Patent Literature 1 has a problem in that gas transport resistance is increased (gas transportability is insufficient), and thus, a catalytic activity is decreased.

The present invention has been made in light of the aforementioned circumstances and aims at providing an electrode catalyst layer having an excellent gas transportability.

Another object of the present invention is to provide a membrane electrode assembly and a fuel cell including a catalyst having an excellent gas transportability.

The present inventors have intensively studied to solve the aforementioned problems, to find that the problems can be solved by a catalyst where a pore volume was a specific value or more and a specific surface area of supported catalyst metals was a specific value or less, and eventually the present invention has been completed.

### Brief Description of Drawings

Fig. 1 is a schematic cross-sectional diagram illustrating a basic configuration of a polymer electrolyte fuel cell according to an embodiment of the present invention.
Fig. 2 is a schematic cross-sectional diagram illustrating a shape and a structure of a catalyst used in the present invention.
Fig. 3 is a schematic diagram illustrating a relationship between a catalyst and an electrolyte in a catalyst layer according to an embodiment of the present invention.

### Description of Embodiments

A catalyst (in this description, also referred to as an "electrode catalyst") used in the embodiment is configured to include a catalyst support (in this description, also referred to as a "support") and a catalyst metal supported on the catalyst support. Herein, the catalyst contains pores having a radius of 1 nm or more and less than 5 nm, a pore volume of the pores is 0.8 cc/g support or more, and the catalyst metal has a specific surface area of 5 to 30 m²/g support. According to the catalyst having the above-described features, filling of the pores of the catalyst with water is suppressed, and enough pores contributing to transportation of a reaction gas is secured. As a result, a catalyst having an excellent gas transportability can be provided. In this description, a pore having a radius of 1 nm or more and less than 5 nm is also referred to as "mesopore".

In the technique of the above-described the Patent Literature 1, by setting a ratio of the pore volume having an appropriate size to a total pore volume to a specific ratio or more, the catalyst metals are supported in a highly dispersed state without agglomeration. The catalyst metals are supported in a fine particle state (in a particle state where the diameter is in the range of 1 to 3 nm), and thus, an effective reaction surface area is increased, so that a catalytic activity is improved.

However, as described above, the present inventors had intensively studied and found a new problem in that the catalyst of the Patent Literature 1 does not have a sufficient gas transportability. With respect to this problem, the present inventors recognize the mechanism explaining that the gas transportability is not sufficient as follows.

In the catalyst disclosed in the Patent Literature 1, in order to increase the effective reaction surface area (specific surface area) of the catalyst metals by supporting fine catalyst metals on a support, the support having a large pore volume, that is, a large specific surface area is used.

However, in the catalyst having a large number of pores described above, the catalyst metal is placed inside the mesopores in dispersed state, and thus, a reaction-gas transport path is lengthened, so that the gas transport resistance is increased. In addition, in the catalyst where the catalyst metals are supported inside the pores in a highly dispersed state, and thus, the effective reaction surface area of the catalyst metals is increased, so that water generated by the catalyst reaction is adsorbed on the hydrophilic surfaces of the catalyst metals. As a result, the pores of the catalyst are filled with water, and the transportation of the reaction gas is inhibited by the water in the pores, so that it is considered that the reaction-gas transport resistance is increased. Namely, in the catalyst disclosed in the Patent Literature 1, by supporting the catalyst metal in a particle state, the catalytic activity is improved; on the other hand, the gas transportability is decreased due to a large specific surface area of the catalyst metal. As a result, a sufficient catalytic activity cannot be exhibited, and the catalyst performance is deteriorated under a particularly high load condition.

On the contrary, the catalyst used in the embodiment includes pores having a radius of 1 nm or more and less than 5 nm, the pore volume of the pores is 0.8 cc/g support or more, and the catalyst metal has a specific surface area of 5 to 30 m²/g support. Due to such features, the pore volume of mesopores effective in gas transportation is sufficiently secured, and the specific surface area of the catalyst metal is decreased, so that the amount of water retained in the mesopore in which the catalyst metal is supported can be reduced. Therefore, since the filling of the mesopores with water is suppressed, a gas such as oxygen can be efficiently transported to the catalyst metal inside the mesopores. Namely, the gas transport resistance of the catalyst can be reduced. As a result, with respect to the catalyst used in the embodiment, the catalyst reaction is facilitated, and a high catalytic activity can be exhibited. For this reason, the membrane electrode assembly and fuel cell comprising the catalyst layer using the catalyst according to the embodiment have an excellent power generation performance.

Hereinafter, embodiments of a catalyst used in the present invention and embodiments of a catalyst layer, a membrane electrode assembly (MEA), and a fuel cell using the catalyst will be described in detail appropriately with reference to the drawings. The same components are denoted by the same reference numerals, and redundant description is omitted.

In this description, "X to Y" representing a range denotes "X or more and Y or less", and "weight" and "mass", "wt% and "mass%", "parts by weight", and "parts by mass" are used interchangeably. Unless otherwise noted, operation and the measurement of physical properties are performed at a room temperature (20 to 25°C) and a relative humidity of 40 to 50%.

### [Fuel Cell]

A fuel cell comprises a membrane electrode assembly (MEA) and a pair of separators including an anode-side separator having a fuel gas passage through which a fuel gas flows and a cathode-side separator having an oxidant gas passage through which an oxidant gas flows. The fuel cell according to the embodiment has excellent durability and can exhibit a high power generation performance.

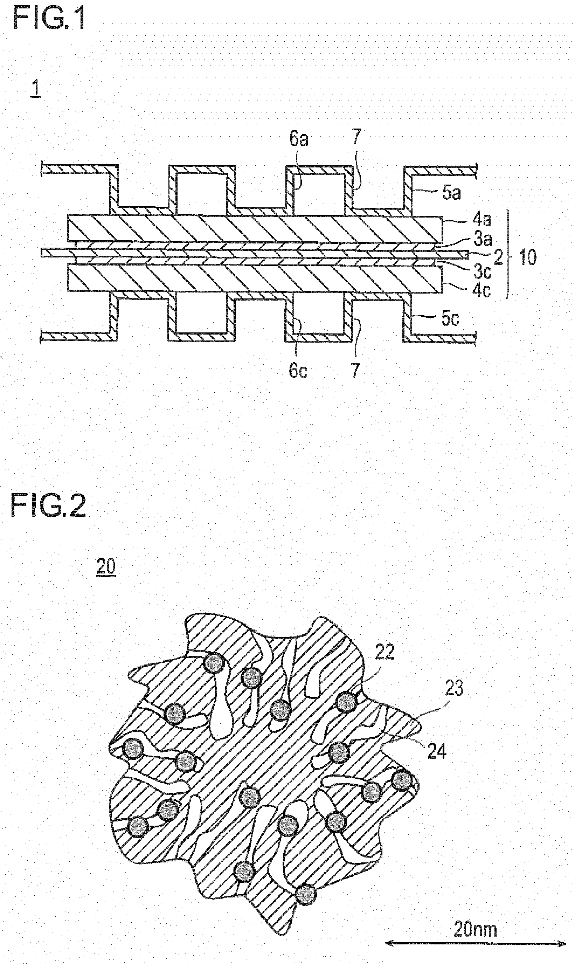

Fig. 1 is a schematic diagram illustrating a basic configuration of a polymer electrolyte fuel cell (PEFC) 1 according to an embodiment of the present invention. First, a PEFC 1 is configured to include a solid polymer electrolyte membrane 2 and a pair of catalyst layers (anode catalyst layer 3a and cathode catalyst layer 3c) interposing the solid polymer electrolyte membrane 2. A stacked body of the solid polymer electrolyte membrane 2 and the Catalyst layers (3a, 3c) is sandwiched by a pair of gas diffusion layers (GDLs) (anode gas diffusion layer 4a and cathode gas diffusion layer 4c). In this manner, the solid polymer electrolyte membrane 2, a pair of the catalyst layers (3a, 3c), and a pair of gas diffusion layers (4a, 4c) in the stacked state constitute a membrane electrode assembly (MEA) 10.

In the PEFC 1, the MEA 10 is sandwiched by a pair of separators (anode separator 5a and cathode separator 5c). In Fig. 1, the separators (5a, 5c) are illustrated to be positioned at two ends of the MEA 10 illustrated. In general, in a fuel cell stack where a plurality of MEAs are stacked, the separator is also used as a separator for adjacent PEFC (not shown). In other words, MEAs in a fuel cell stack are sequentially stacked through the separator to constitute the stack. In an actual fuel cell stack, a gas sealing member is disposed between the separators (5a, 5c) and the solid polymer electrolyte membrane 2 and between the PEFC 1 and a different PEFC adjacent thereto. However, it is omitted in Fig. 1.

The separators (5a, 5c) are obtained by applying a pressing process to a thin board having a thickness of, for example, 0.5 mm or less to form a corrugating shape illustrated in Fig. 1. Convex portions of the separators 5a and 5c seen from the MEA side are in contact with the MEA 10. This secures an electrical connection with the MEA 10. Concave portions (spaces between the separator and the MEA formed by the corrugating shapes of the separators) of the separators (5a and 5c) seen from the MEA side function as a gas passage for passing a gas during the operation of the PEFC 1. Specifically, a fuel gas (for example, hydrogen) flows through a gas passage 6a of the anode separator 5a, and an oxidant gas (for example, air) flows through a gas passage 6c of the cathode separator 5c.

On the other hand, concave portions of the separators (5a, 5c) seen from the side opposite to the MEA side function as a coolant passage 7 for passing a coolant (e.g. water) for cooling the PEFC during the operation of the PEFC 1. In addition, manifolds (not shown) are typically installed in the separators. The manifold functions as a connecting means for connecting cells when the stack is configured. According to the configuration, a mechanical strength of the fuel cell stack can be secured.

In the embodiment illustrated in Fig. 1, each of the separators (5a, 5c) is formed in a corrugating shape. However, the separator is not limited to such a corrugating shape. If it can serve as a gas passage and a coolant passage, arbitrary shape such as a flat shape and a partially corrugating shape may be employed.

The fuel cell including the MEA according to the present invention as described above has excellent performance of power generation. Herein, the type of the fuel cell is not particularly limited. In the above description, the polymer electrolyte fuel cell is exemplified, but besides, an alkali fuel cell, a direct methanol fuel cell, a micro fuel cell, and the like may be exemplified. Among the fuel cells, due to a small size and capability of obtaining high density and high power, a polymer electrolyte fuel cell (PEFC) is preferred. In addition, the fuel cell is useful as a power source for energy storage system besides a power source for a vehicle such as a car where a mounting space is limited. Among the power sources, the fuel cell is particularly preferably used as a power source for a vehicle such as a car where a high output voltage is required after the stopping of operation for a relatively long time.

A fuel used for operating the fuel cell is not particularly limited. For example, hydrogen, methanol, ethanol, 1-propanol, 2-propanol, 1-butanol, secondary butanol, tertiary butanol, dimethyl ether, diethyl ether, ethylene glycol, diethylene glycol, or the like can be used. Among them, in view of capability of high output, hydrogen or methanol is preferably used.

In addition, although application use of the fuel cell is not particularly limited, the fuel cell is preferably applied to vehicles. The electrolyte membrane-electrode assembly according to the present invention has excellent power generation performance and durability, and can be downsized. Therefore, in terms of mountability on a vehicle, the fuel cell according to the present invention is particularly advantageous in the case where the fuel cell is applied to a vehicle.

Hereinafter, members constituting the fuel cell according to the present invention will be described in brief, but the scope of the present invention is not limited only to the following forms.

### [Catalyst (Electrode Catalyst)]

Fig. 2 is a schematic cross-sectional diagram illustrating a shape and a structure of a catalyst used in an embodiment of the present invention. As illustrated in Fig. 2, a catalyst 20 used in the present invention is configured to include catalyst metal 22 and a catalyst support 23. In addition, the catalyst 20 has pores (mesopores) 24 having a radius of 1 nm or more and less
than 5 nm. In terms of preventing the contact of the electrolyte (electrolyte polymer and ionomer) with the catalyst metal in the catalyst layer and improving the catalytic activity, substantially all the catalyst metals 22 are supported inside the mesopores 24. If the catalyst metal is in contact with the electrolyte, an area-specific activity of the surfaces of the catalyst metal is decreased. On the contrary, due to the above-described features, the electrolyte is not allowed to enter the mesopore 24 of the catalyst support 23, so that the catalyst metal 22 and the electrolyte are physically separated from each other. In addition, a three-phase boundary with water can be formed, so that the catalytic activity is improved. Herein, the amount of "substantially all the catalyst metals" is not particularly limited if an amount which can improve a sufficient catalytic activity can be attained. The amount of "substantially all the catalyst metals" is preferably 50 wt% or more (upper limit: 100 wt%), more preferably 80 wt% or more (upper limit: 100 wt%) with respect to all the catalyst metals.

In this description, the state "the catalyst metals are supported inside the mesopores" can be confirmed by a decrease in volume of mesopores before and after the supporting of catalyst metals on a support. Specifically, a support includes mesopores, and the mesopores have the respective certain volumes. If catalyst metals are supported in the pore(s), the volumes of the pores are decreased. Therefore, the case where a difference between a volume of mesopores of a catalyst (support) before the supporting of catalyst metals and a volume of mesopores of a catalyst (support) after the supporting of catalyst metals [= (volume before supporting) - (volume after supporting)] exceeds 0 indicates that "the catalyst metals are supported inside the mesopore(s)".

### (Catalyst Support)

Hereinafter, the support included in the catalyst will be described. The pore volume of pores (mesopores) having a radius of 1 nm or more and less than 5 nm (of the catalyst after the supporting of the catalyst metals) is 0.8 cc/g support or more. The pore volume of mesopores is preferably in the range of 0.8 to 3 cc/g support, particularly preferably in the range of 0.8 to 2 cc/g support. If the pore volume is within such a range, a large number of the pores contributing to the transportation of the reaction gas can be secured, so that the transport resistance of the reaction-gas transport resistance can be reduced. Therefore, since the reaction gas is speedily transported to the surfaces of the catalyst metals placed inside the mesopores, the catalyst metal is effectively used. In addition, if the pore volume of mesopores is within the above-described range, the catalyst metals can be placed (supported) inside the mesopores, and thus, an electrolyte and catalyst metals in the catalyst layer can be physically separated from each other (contact between catalyst metals and an electrolyte can be more effectively suppressed and prevented). In this manner, in the above-described embodiment where contact of the catalyst metals inside the mesopores with the electrolyte is suppressed, the activity of the catalyst can be more effectively used in comparison with the case where a large number of the catalyst metals are supported on the surfaces of the supports. In addition, in this description, the pore volume of pores having a radius of 1 nm or more and less than 5 nm is also simply referred to as "pore volume of mesopores".

A BET specific surface area (of the catalyst after the supporting of the catalyst metal) [BET specific surface area of catalyst per 1 g of support (m²/g support)] is not particularly limited, but is preferably 1000 m²/g support or more, more preferably 1500 m²/g support or more. In addition, the upper limit of the BET specific surface area of the catalyst is not particularly limited, but it is preferably 3000 m²/g support or less, more preferably 1800 m²/g support or less. If the specific surface area is within the above-described range, a sufficient amount of mesopores can be secured, and the catalyst metal particles can be supported with a good dispersibility. Herein, the expression "the dispersibility of the catalyst metal particles is good" denotes the state where the catalyst metal particles are supported in the state where the particles are separated from each other without agglomeration. If the catalyst metal particles are agglomerated to be in a lumped shape, a localized flux of the gas is increased in the vicinity of the catalyst metals in a lumped shape, so that the gas transport resistance is increased. On the other hand, if the catalyst metal particles are individually supported in a dispersed state, a localized flux of the gas in the vicinity of the individual particles is low in comparison with the above-described case. Therefore, the reaction-gas transport resistance is decreased, and thus, the catalyst metals are effectively used.

In this description, the "BET specific surface area (m²/g support) " of the catalyst is measured by a nitrogen adsorption method. Specifically, about 0.04 to 0.07 g of a sample (catalyst powder or catalyst support) is accurately weighed and sealed in a sample tube. The sample tube is preliminarily dried in a vacuum drier at 90°C for several hours, to obtain a sample for measurement. For the weighing, an electronic balance (AW220) produced by Shimadzu Co. , Ltd. is used. In the case of a coated sheet, about 0.03 to 0.04 g of a net weight of a coat layer obtained by subtracting a weight of Teflon (registered trademark) (substrate) having the same area from a total weight of the coated sheet is used as a sample weight. Next, under the following measurement condition, a BET specific surface area is measured. In an adsorption side of adsorption and desorption isotherms, a BET plot is produced from a relative pressure (P/P0) range of about 0.00 to 0.45, and a BET specific surface area is calculated from the slope and the intercept.

### [Chem. 1]

### < Measurement Condition >

Measurement Apparatus : BELSOROO 36, High - Precession Automatic Gas Adsorption Apparatus produced by BEL Japan, Inc.
Adsorption Gas : N2
Dead Volume Measurement Gas : He
Adsorption Temperature : 77 K (Liquid Nitrogen Temperature)
Measurement Preparation : 90° C, Several hours in Vacuum Drier (After He Purging, Setting on Measurement Stage)
Measurement Mode : Adsorption Process and Desorption Process in Isotherm
Measurement Relative Pressure P/Po : about 0 to 0.99
Equilibrium Setting Time : 180 sec for 1 relative pressure

The "pore radius (nm) of mesopores" denotes a radius of pores measured by a nitrogen adsorption method (DH method). Herein, the upper limit of the pore radius of mesopores is not particularly limited, but it is 100 nm or less.

The "pore volume of mesopores" denotes a total volume of mesopores having a radius of 1 nm or more and less than 5 nm existing in a catalyst, and is expressed by volume per 1 g of support (cc/g support). The "pore volume of mesopores (cc/g support)" is calculated as an area (integration value) under a differential pore distribution curve obtained according to a nitrogen adsorption method (DH method).

The "differential pore distribution" is a distribution curve obtained by plotting a pore diameter in the horizontal axis and a pore volume corresponding to the pore diameter in a catalyst in the vertical axis. Namely, when a pore volume of a catalyst obtained by a nitrogen adsorption method (DH method) is denoted by V and a pore diameter is denoted by D, a value (dV/d(logD)) is obtained by dividing the differential pore volume dV by a differential logarithm d(log D) of the pore diameter. Next, a differential pore distribution curve is obtained by plotting the dV/d(logD) for an average pore diameter in each section. A differential pore volume dV denotes an increment of pore volume between measurement points.

In this description, a method for measuring a radius and a pore volume of mesopores by a nitrogen adsorption method (DH method) is not particularly limited. For example, methods disclosed in well-known literatures such as "Science of Adsorption" (second edition written by Kondo Seiichi, Ishikawa Tatsuo, and Abe Ikuo, Maruzen Co., Ltd.), "Fuel Cell Analysis Method" (compiled by Takasu Yoshio, Yoshitake Yu, and Ishihara Tatsumi of KAGAKU DOJIN), and an article by D. Dollion and G. R. Heal in J. Appl. Chem. 14, 109 (1964) may be employed. In this description, the radius and pore volume of mesopores by a nitrogen adsorption method (DH method) are a value measured by the method disclosed in the article written by D. Dollion and G. R. Heal in J. Appl. Chem. 14, 109 (1964).

The method of manufacturing the catalyst having a specific pore volume described above is not particularly limited, but it is important to set the pore volume of mesopores of the support to the above-described pore distribution. Specifically, as the method of manufacturing the support having the mesopores where the pore volume of mesopores is 0.8 cc/g support or more, the method disclosed in JP-A- 2010-208887 (US 2011/318254 A1, the same hereinafter), WO 2009/075264 (US 2011/058308 A1, the same hereinafter), or the like is preferably used.

A material of the support is not particularly limited if pores (primary pores) having above-described pore volume can be formed inside the support and if the support has enough specific surface area and enough electron conductivity to support a catalyst component inside the mesopores in a dispersed state. Preferably, a main component is carbon. Specifically, carbon particles made of carbon black (Ketjen Black, oil furnace black, channel black, lamp black, thermal black, acetylene black, or the like), activated charcoal, or the like may be exemplified. The expression "main component is carbon" denotes that the support contains carbon atoms as a main component, and includes both of the configurations that the support consists only of carbon atoms and that the support substantially consists of carbon atoms. An element (s) other than carbon atom may be contained. The expression "substantially consists of carbon atoms" denotes that impurities of about 2 to 3 wt% or less can be contaminated.

More preferably, in view of easy formation of a desired pore space inside a support, carbon black is used, and particularly preferably, the support manufactured according to the literatures such as JP-A-2010-208887, WO 2009/075264, or the like is used.

Besides the aforementioned carbon materials, a porous metal such as Sn (tin) or Ti (titanium) or a conductive metal oxide can also be used as the support.

The BET specific surface area of the support may be a specific surface area enough to highly dispersively support the catalyst component. The BET specific surface area of the support is substantially equivalent to the BET specific surface area of the catalyst. The BET specific surface area of the support is preferably 1000 m²/g or more, more preferably 1500 m²/g or more. In addition, the upper limit of the BET specific surface area of the support is not particularly limited, but it is preferably 3000 m²/g support or less, more preferably 1800 m²/g support or less. If the specific surface area is within the above-described range, since a sufficient number of the mesopores can be secured, enough mesopores contributing to transportation of the gas is secured, so that the gas transport resistance can be further decreased, and the catalyst metal particles can be placed (supported) inside the mesopores with a good dispersibility. Therefore, since the localized flux in the vicinity of the catalyst metal particles is small, the reaction gas is speedily transported, so that the catalyst metals are effectively used.

An average particle diameter of the support is preferably in the range of 20 to 2000 nm. If the average particle diameter of the support is within such a range, even in the case where the above-described pore structure is formed in the support, mechanical strength can be maintained, and a thickness of the catalyst layer can be controlled within an appropriate range. As a value of the "average particle diameter of a support", unless otherwise noted, a value calculated as an average value of particle diameters of particles observed within several or several tens of fields by using observation means such as a scanning electron microscope (SEM) or a transmission electron microscope (TEM) is employed. In addition, the "particle diameter" denotes a maximum distance among distances between arbitrary two points on an outline of a particle.

In the present invention, there is no need to use the above-described granular porous support, so long as the support has the above-described pore distributions of mesopores in the catalyst.

Namely, as the support, a non-porous conductive support, nonwoven fabric, carbon paper, carbon cloth, or the like made of carbon fiber constituting a gas diffusion layer, or the like may be exemplified. In this case, the catalyst can be supported on the non-porous conductive support or can be directly attached to the nonwoven fabric, the carbon paper, the carbon cloth, or the like made of the carbon fiber constituting the gas diffusion layer of the membrane electrode assembly.

A catalyst metal which can be used in the present invention performs catalysis of electrochemical reaction. As a catalyst metal used for an anode catalyst layer, a well-known catalyst can be used in a similar manner without particular limitation if the catalyst has catalytic effects on oxidation reaction of hydrogen. In addition, as a catalyst metal used for a cathode catalyst layer, a well-known catalyst can be used in a similar manner without particular limitation if the catalyst has catalytic effects on reduction reaction of oxygen. Specifically, the catalyst metal can be selected among metals such as platinum, ruthenium, iridium, rhodium, palladium, osmium, tungsten, lead, iron, copper, silver, chromium, cobalt, nickel, manganese, vanadium, molybdenum, gallium, and aluminum, and alloys thereof.

Among them, in view of improved catalytic activity, poison resistance to carbon monoxide or the like, heat resistance, or the like, a catalyst metal containing at least platinum is preferably used. Namely, the catalyst metal preferably is platinum or contains platinum and a metal component other than the platinum, more preferably is platinum or a platinum-containing alloy. Such a catalyst metal can exhibit high activity. Although a composition of an alloy depends on a kind of the metal constituting the alloy, a content of platinum may be in the range of 30 to 90 atom%, and a content of a metal constituting the alloy together with platinum may be in the range of 10 to 70 atom%. In general, an alloy is obtained by mixing a metal element with at least one metal element or non-metal element, and is a general term for substances having metallic properties. The structure of the alloy includes an eutectic alloy which is a mixture where component elements form separate crystals, an alloy where component elements are completely fused to form a solid solution, an alloy where component elements form a intermetallic compound or a compound between a metal and a non-metal, and the like, and any one thereof may be employed in the present application. A catalyst metal used in an anode catalyst layer and a catalyst metal used in a cathode catalyst layer can be appropriately selected from the aforementioned alloys. In this description, unless otherwise noted, the description of the catalyst metal for the anode catalyst layer and the catalyst metal for the cathode catalyst layer have the same definition. However, the catalyst metal for the anode catalyst layer and the catalyst metal for the cathode catalyst layer are not necessarily the same, and the catalyst metals can be appropriately selected so that the desired functions described above can be attained.

In this embodiment, a specific surface area of the catalyst metal (catalyst component) is in the range of 5 to 30 m²/g support, preferably in the range of 10 to 20 m²/g support. Since the surface of the catalyst metals are hydrophilic and water generated by the catalyst reaction is easily adsorbed, the water is easily retained in the mesopores in which the catalyst metals are placed. If the water is retained in the mesopores, the gas transport path becomes narrow, and since the diffusion velocity of the reaction gas in water is low, gas transportability is decreased. On the contrary, by setting the specific surface area of the catalyst metals to be relatively such small as the above-described range, the amount of water adsorbed to the surfaces of the catalyst metals can be reduced. As a result, the water is not easily retained inside the mesopore, so that water content in the catalyst or the catalyst layer can be allowed to be low. Therefore, the reaction-gas transport resistance can be decreased, so that the catalyst metals are effectively used. In addition, in the present invention, as the "specific surface area of the catalyst metal", the values measured according to the method described in the following Examples are employed.

The shape and size of the catalyst metal are not particularly limited so long as the specific surface area is within the above-described range, but the shapes and sizes of well-known catalyst components may be employed. As the shape, for example, a granular shape, a squamous shape, a laminar shape, or the like may be used, but the granular shape is preferred. In this case, an average particle diameter of catalyst metal (catalyst metal particles) is not particularly limited, but it is preferably more than 3 nm, more preferably in the range of more than 3 nm to 30 nm or less, particularly preferably in the range of more than 3 nm to 10 nm or less. If the average particle diameter of catalyst metal is more than 3 nm, the specific surface area of the catalyst metal can be decreased. As a result, as described above, the amount of water adsorbed to the surfaces of the catalyst metal can be reduced, so that a large number of the mesopores contributing to the transportation of the reaction gas can be secured. Therefore, the reaction-gas transport resistance can be further reduced. In addition, elution due to a change in voltage can be prevented, and temporal degradation in performance can be also suppressed. Therefore, catalytic activity can be further improved. Namely, catalyst reaction can be more efficiently facilitated. On the other hand, if the average particle diameter of catalyst metal particle is 30 nm or less, the catalyst metals can be supported inside the mesopores of the support by a simple method, so that the covering ratio of catalyst metals with an electrolyte can be reduced. In the present invention, as the "average particle diameter of catalyst metal", the values measured according to the methods described in the following Examples are employed.

A ratio of the catalyst metals to the catalyst (sometimes, referred to as a "catalyst support ratio") is a ratio of the weight of the supported catalyst metals to the entire weight of the catalyst (sum of the weights of the support and the catalyst metals). The catalyst support ratio is preferably 40 wt% or less. Furthermore, the catalyst support ratio is more preferably 30 wt% or less. On the other hand, the lower limit of the catalyst support ratio is preferably 5 wt%, more preferably 20 wt%. If the catalyst support ratio is within the above-described range, a catalyst where the specific surface area of catalyst metals is small can be obtained. As a result, the amount of water adsorbed to the surfaces of the catalyst metals can be reduced, so that a large number of the mesopores contributing to the transportation of the reaction gas can be secured. Therefore, since the reaction-gas transport resistance can be further reduced, the reaction gas is speedily transported. In addition, the catalyst metals are effectively used, so that the catalytic activity can be further improved. Namely, the catalyst reaction can be more efficiently facilitated. In addition, according to the embodiment, the used amount of the catalyst metals may be relatively small, which is preferred in view of the economic point. In the present invention, the "catalyst support ratio" is a value obtained by measuring the weight of the support before the supporting of catalyst metals and the weight of the catalyst after the supporting of catalyst metals.

### [Catalyst Layer]

As described above, the catalyst used in the embodiment decreases the gas transport resistance, so that a high catalytic activity can be exhibited. Namely, the catalyst used in to the embodiment can facilitate the catalyst reaction. Therefore, the catalyst used in the embodiment can be appropriately used for an electrode catalyst layer for fuel cell. Namely, the embodiment of the present invention provides an electrode catalyst layer for fuel cell (sometimes, referred to as a "catalyst layer") including the above-described catalyst and an electrolyte. In the catalyst
layer, the reaction-gas transport resistance to the surfaces of the catalyst metals can be decreased.

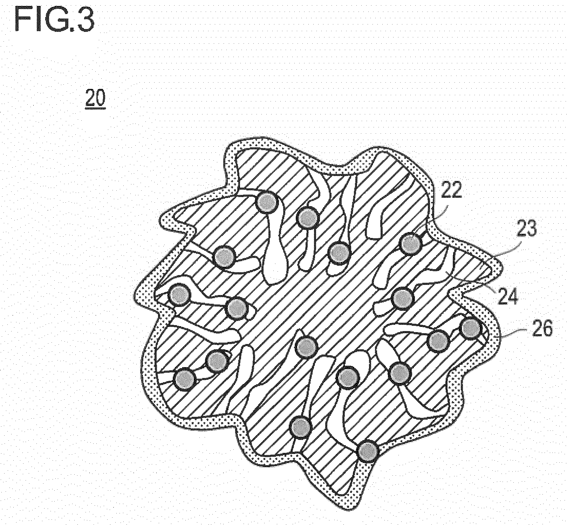

Fig. 3 is a schematic diagram illustrating a relationship between a catalyst and an electrolyte in a catalyst layer according to an embodiment of the present invention. As illustrated in Fig. 3, in the catalyst layer according to the present invention, although the catalyst is coated with an electrolyte 26, the electrolyte 26 does not enter the mesopores 24 of the catalyst (catalyst supports 23). Therefore, although the catalyst metal 22 on the surface of the catalyst support 23 is in contact with the electrolyte 26, the catalyst metal 22 supported in the mesopore 24 is not in contact with the electrolyte 26. The catalyst metal in the mesopore forms three-phase boundary with an oxygen gas and water in a state that the catalyst metal is not in contact with the electrolyte, so that a reaction active area of the catalyst metal can be secured.

Although the catalyst according to the embodiment may exist either in a cathode catalyst layer or an anode catalyst layer, the catalyst is preferably used in a cathode catalyst layer. As described above, although the catalyst according to the embodiment is not in contact with the electrolyte, the catalyst can be effectively used by forming three-phase boundary of the catalyst and water. This is because water is formed in the cathode catalyst layer.

An electrolyte is not particularly limited, but it is preferably an ion-conductive polymer electrolyte. Since the polymer electrolyte serves to transfer protons generated in the vicinity of the catalyst active material on a fuel electrode side, the polymer electrolyte is also referred to as a proton conductive polymer.

The polymer electrolyte is not particularly limited, but well-known knowledge in the art can be appropriately referred to. The polymer electrolytes are mainly classified into fluorine-based polymer electrolytes and hydrocarbon-based polymer electrolytes depending on a type of an ion-exchange resin as a constituent material.

As an ion-exchange resin constituting the fluorine-based polymer electrolyte, for example, perfluorocarbon sulfonic acid based polymers such as Nafion (registered trademark, produced by DuPont), Aciplex (registered trademark, produced by Asahi Kasei Co. , Ltd.), and Flemion (registered trademark, produced by Asahi Glass Co., Ltd.), perfluorocarbon phosphoric acid based polymers, trifluorostyrene sulfonic acid based polymers, ethylene tetrafluoroethylene-g-styrene sulfonic acid based polymers, ethylene-tetrafluoroethylene copolymers, polyvinylidene fluoride-perfluorocarbon sulfonic acid based polymers, and the like may be exemplified. In terms excellent heat resistance, chemical stability, durability, and mechanical strength, the fluorine-based polymer electrolyte is preferably used, and a fluorine-based polymer electrolyte formed of a perfluorocarbon sulfonic acid based polymer is particularly preferably used.

As a hydrocarbon-based electrolyte, sulfonated polyether sulfones (S-PES), sulfonated polyaryl ether ketones, sulfonated polybenzimidazole alkyls, phosphonated polybenzimidazole alkyls, sulfonated polystyrenes, sulfonated polyether ether ketones (S-PEEK), sulfonated polyphenylenes (S-PPP), and the like may be exemplified. In terms of manufacturing advantages such as inexpensive raw materials, simple manufacturing processes, and high selectivity of materials, a hydrocarbon-based polymer electrolyte is preferably used. These ion-exchange resins may be singly used, or two or more resins may be used together. In addition, the material is not limited to the above-described material, but another material may be used.

With respect to the polymer electrolyte which serves to transfer protons, proton conductivity is important. In the case where EW of a polymer electrolyte is too large, ion conductivity with in the entire catalyst layer would be decreased. Therefore, the catalyst layer according to the embodiment preferably includes a polymer electrolyte having a small EW. Specifically, catalyst layer according to the embodiment preferably includes a polymer electrolyte having an EW of 1500 g/eq. or less, more preferably includes a polymer electrolyte having an EW of 1200 g/eq. or less, and particularly preferably includes a polymer electrolyte having an EW of 1000 g/eq. or less.

On the other hand, in the case where the EW is too small, since hydrophilicity is too high, water would be hard to smoothly move. Due to such a point of view, the EW of polymer electrolyte is preferably 600 g/eq. or more. The EW (Equivalent Weight) represents an equivalent weight of an exchange group having proton conductivity. The equivalent weight is a dry weight of an ion exchange membrane per 1 eq. of ion exchange group, and is represented in units of "g/eq.".

It is preferable that the catalyst layer includes two types or more of polymer electrolytes having different EWs in a power generation surface, and in this case, among the polymer electrolytes, the polymer electrolyte having the lowest EW is used in an area where relative humidity of a gas in a passage is 90% or less. By employing such material arrangement, resistance is decreased irrespective of a current density area, so that cell performance can be improved. The EW of polymer electrolyte used in the area where relative humidity of the gas in a passage is 90% or less, that is, EW of polymer electrolyte having the lowest EW is preferably 900 g/eq. or less. By this, the above-described effects can be further more certainly and more remarkably attained.

The polymer electrolyte having the lowest EW is preferably used in an area of which temperature is higher than an average temperature of inlet and outlet for cooling water. By this, resistance is decreased irrespective of a current density area, so that cell performance can be further improved.

In terms decreased resistance value of a fuel cell system, the polymer electrolyte having the lowest EW is preferably provided in an area within the range of 3/5 or less of the passage length from a gas supply inlet of at least one of a fuel gas and an oxidant gas.

The catalyst layer according to the embodiment may include, between the catalyst and the polymer electrolyte, a liquid proton conducting material capable of connecting the catalyst and the polymer electrolyte in a proton conductible state. By introducing the liquid proton conducting material, a proton transport path through the liquid proton conducting material is provided between the catalyst and the polymer electrolyte, so that protons necessary for the power generation can be efficiently transported on the surface of the catalyst. By this, availability of the catalyst is improved, and thus an amount of used catalyst can be reduced while maintaining power generation performance. The liquid proton conducting material may be interposed between the catalyst and the polymer electrolyte. The liquid proton conducting material may be disposed in pores (secondary pores) between porous supports in a catalyst layer or may be disposed in pores (mesopores : primary pores) in porous supports.

The liquid proton conducting material is not particularly limited if the material has ion conductivity and has a function of forming a proton transport path between the catalyst and the polymer electrolyte. Specifically, water, a protic ionic liquid, an aqueous solution of perchloric acid, an aqueous solution of nitric acid, an aqueous solution of formic acid, an aqueous solution of acetic acid, and the like may be exemplified.

In the case of using water as the liquid proton conducting material, the water can be introduced as the liquid proton conducting material into the catalyst layer by wetting the catalyst layer with a small amount of liquid water or a humidified gas before the start of power generation. In addition, water generated through electrochemical reaction during the operation of a fuel cell may be used as the liquid proton conducting material. Therefore, in a state where a fuel cell starts to be operated, the liquid proton conducting material is not necessarily retained. For example, a surface distance between the catalyst and the electrolyte is preferably set to be a diameter of an oxygen ion constituting a water molecule, that is, 0.28 nm or more. By maintaining such a distance, water (liquid proton conducting material) can be interposed between the catalyst and the polymer electrolyte (in the liquid conducting material retaining portion) while maintaining the non-contact state between the catalyst and the polymer electrolyte, so that a proton transport path can be secured by water therebetween.

In the case of using a material such as an ionic liquid other than water as the liquid proton conducting material, the ionic liquid, the polymer electrolyte, and the catalyst are preferably allowed to be dispersed in a solution in the preparation of a catalyst ink. However, the ionic liquid may be added at the time of coating a catalyst layer substrate with a catalyst.

In the catalyst used in the present invention, a total area of the catalyst which is in contact with the polymer electrolyte is set to be smaller than a total area of the catalyst exposed to the liquid conducting material retaining portion.

Comparison of these areas can be performed, for example, by obtaining a magnitude relationship between capacitance of an electrical double layer formed in a catalyst-polymer electrolyte interface and capacitance of an electrical double layer formed in a catalyst-liquid proton conducting material interface in a state where the liquid conducting material retaining portion is filled with the liquid proton conducting material. Namely, since capacitance of an electrical double layer is proportional to an area of an electrochemically effective interface, if the capacitance of the electrical double layer formed in the catalyst-electrolyte interface is smaller than the capacitance of the electrical double layer formed in the catalyst-liquid proton conducting material interface, a contact area of the catalyst with the electrolyte is smaller than an area thereof exposed to the liquid conducting material retaining portion.

Herein, a measuring method for capacitance of an electrical double layer formed in a catalyst-electrolyte interface and capacitance of an electrical double layer formed in a catalyst-liquid proton conducting material interface, that is, a magnitude relationship between a contact area of the catalyst with the electrolyte and a contact area of the catalyst and the liquid proton conducting material (determination method for a magnitude relationship between a contact area of the catalyst and the electrolyte and an area of the catalyst exposed to the liquid conducting material retaining portion) will be described.

Namely, in the catalyst layer according to the embodiment, the following four types of interfaces can contribute as capacitance of electrical double layer (Cdl):
(1) catalyst-polymer electrolyte (C-S)
(2) catalyst-liquid proton conducting material (C-L)
(3) porous support-polymer electrolyte (Cr-S)
(4) porous support-liquid proton conducting material (Cr-L)

As described above, since capacitance of an electrical double layer is proportional to an area of an electrochemically effective interface, Cdl_{C-S} (capacitance of an electrical double layer in a catalyst-polymer electrolyte interface) and Cdl_{C-L} (capacitance of an electrical double layer in a catalyst-liquid proton conducting material interface) may be obtained. Therefore, the contribution of the four types of interfaces to capacitance of an electrical double layer (Cdl) can be identified as follows.

First, for example, under a high humidity condition such as 100% RH and under a lower humidity condition such as 10% RH or less, each capacitance of electrical double layers is measured. As a measurement method for the capacitance of electrical double layer, cyclic voltammetry, electrochemical impedance spectroscopy, or the like may be exemplified. From the comparison, the contribution of the liquid proton conducting material (in this case, "water"), that is, the above-described contributions (2) and (4) can be identified.

In addition, the contributions to capacitance of an electrical double layer can be identified by deactivating a catalyst, for example, in the case of using Pt as the catalyst, by deactivating the catalyst by supplying CO gas to an electrode to be measured to allow CO to be adsorbed on the surface of Pt. In this state, as described above, under the high humidity condition and under the low humidity condition, each capacitance of electrical double layers is measured by the same method, and from the comparison, the contributions of the catalyst, that is, the above-described contributions (1) and (2) can be identified.

By using the above-described method, all the contributions (1) to (4) described above can be identified, the capacitance of the electrical double layer in the interface between the catalyst and the polymer electrolyte and the capacitance of the electrical double layer in the interface between the catalyst and the liquid proton conducting material can be obtained.

Namely, a measurement value (A) in a highly-humidified state can be regarded as capacitance of electrical double layer formed in all the interfaces (1) to (4), and a measurement value (B) in a lowly-humidified state can be regarded as capacitance of the electrical double layer formed in the interfaces (1) and (3). In addition, a measurement value (C) in a catalyst-deactivated and highly-humidified state can be regarded as capacitance of the electrical double layer formed in the interfaces (3) and (4), and a measurement value (D) in a catalyst-deactivated and lowly-humidified state can be regarded as capacitance of the electrical double layer formed in the interface (3).

Therefore, the difference between A and C can be regarded as the capacitance of the electrical double layer formed in the interfaces (1) and (2), and the difference between B and D can be regarded as the capacitance of the electrical double layer formed in the interface (1). Next, by calculating the difference between these values, i.e., (A-C)-(B-D), the capacitance of the electrical double layer formed in the interface (2) can be obtained. In addition, a contact area of the catalyst with the polymer electrolyte or an exposed area thereof to the conducting material retaining portion can be obtained by, for example, TEM (transmission electron microscope) tomography besides the above-described method.

If necessary, the catalyst layer may contain additives of a water repellent such as polytetrafluoroethylene, polyhexafluoropropylene, and tetrafluoroethylene-hexafluoropropylene copolymer, a dispersant such as a surfactant, a thickener such as glycerin, ethylene glycol (EG), polyvinyl alcohol (PVA), and propylene glycol (PG), a pore-forming agent, or the like.

A thickness of the catalyst layer (as a dried thickness) is preferably in the range of 0.05 to 30 µm, more preferably in the range of 1 to 20 µm, even more preferably in the range of 2 to 15 µm. The thickness can be applied to both of the cathode catalyst layer and the anode catalyst layer. However, the thickness of the cathode catalyst layer and the thickness of the anode catalyst layer may be equal to or different from each other.

### (Method of Manufacturing Catalyst Layer)

Hereinafter, a method for manufacturing the catalyst layer will be described as an exemplary embodiment, but the scope of the present invention is not limited to the following embodiment. In addition, all the conditions for the components and the materials of the catalyst layer are as described above, and thus, the description thereof is omitted.

First, a support (in this description, also referred to as a "porous support" or a "conductive porous support") is prepared, and a pore structure is controlled by performing heat treatment on the support. Specifically, the support may be manufactured as described above in the method of manufacturing the support. By this, pores having a specific pore distribution (pores including mesopores and a pore volume of mesopore being 0.8 cc/g support or more) can be formed in the support. In addition, by the heat treatment, graphitization of the support is simultaneously facilitated, so that corrosion resistance can be improved.

The condition of the heat treatment is different according to the material, and thus, the condition is appropriately determined so as to obtain a desired pore structure. In general, if the heating temperature is set to be high, the mode radius of the pore distribution has a tendency to be shifted in the direction where the pore diameter becomes large (pores radius becomes large). The heat treatment condition may be determined according to the material while checking the pore structure, and the skilled in the art can easily determine the condition. In addition, although a technique of graphitizing the support by performing the heat treatment at a high temperature is known in the art, in the heat treatment in the art, most of the pores in the support may be blocked, and thus, the control of a micro pore structure (wide, shallow primary pores) in the vicinity of the catalyst is not performed.

Next, the catalyst metal is supported on the porous support, so that a catalyst powder is prepared. The supporting of the catalyst on the porous support can be performed by a well-known method. For example, a well-known method such as an impregnation method, a liquid phase reduction supporting method, an evaporation drying method, a colloid adsorption method, a spray pyrolysis method, or reverse micelle (micro-emulsion method) may be used. In addition, in order to set the average particle diameter of catalyst metal to be within a desired range, after the catalyst metals are supported on the supports, heat treatment may be performed under a reductive ambience. At this time, the heat treatment temperature is preferably in the range of 300 to 1200°C, more preferably in the range of 500 to 1150°C, particularly preferably in the range of 700 to 1000°C. In addition, a reductive ambience is not particularly limited so long as the reductive ambience contributes to particle growth of the catalyst metals, but the heat treatment is preferably performed under a mixed ambience of a reductive gas and an inert gas. The reductive gas is not particularly limited, but a hydrogen (H₂) gas is preferred. In addition, the inert gas is not particularly limited, but helium (He), neon (Ne), argon (Ar), krypton (Kr), xenon (Xe), nitrogen (N₂), and the like can be used. The inert gas may be used alone or in a form of a mixture of two or more types of the gases. In addition, the heat treatment time is preferably in the range of 0.1 to 2 hours, more preferably in the range of 0.5 to 1.5 hours. Furthermore, after the catalyst powder is obtained by the above-described method, acid treatment of the catalyst powder may be performed. At this time, the method of the acid treatment is not particularly limited. For example, the acid treatment may be performed by immersing the catalyst powder into an acidic aqueous solution such as nitric acid, filtering off the catalyst powder, and drying the resulting product. At this time, an immersion condition for the catalyst powder is not particularly limited, but the catalyst powder is preferably immersed into an acidic aqueous solution at a temperature of 50 to 90°C for about 1 to 5 hours.

Subsequently, a catalyst ink containing the catalyst powder, polymer electrolyte, and a solvent is prepared. As the solvent, there is no particular limitation. A typical solvent used for forming a catalyst layer may be similarly used. Specifically, water such as tap water, pure water, ion-exchanged water, distilled water, cyclohexanol, a lower alcohol having 1 to 4 carbons such as methanol, ethanol, n-propanol, isopropanol, n-butanol, sec-butanol, isobutanol, and tert-butanol, propylene glycol, benzene, toluene, xylene, or the like may be used. Besides, acetic acid butyl alcohol, dimethyl ether, ethylene glycol, or the like may be used as a solvent. These solvents may be used alone or may be used in a state of a mixture of two or more solvents.

An amount of solvent for preparing the catalyst ink is not particularly limited so long as the electrolyte can be completely dissolved. Specifically, a concentration (a solid content) of the catalyst powder and the polymer electrolyte is preferably in the range of 1 to 50 wt% in the electrode catalyst ink, more preferably in the range of about 5 to 30 wt%.

In the case of using an additive such as a water repellent, a dispersant, a thickener, and a pore-forming agent, the additive may be added to the catalyst ink. In this case, an added amount of the additive is not particularly limited so long as it does not interfere with the above-described effects by the present invention. For example, the added amount of the additive is preferably in the range of 5 to 20 wt%, with respect to the total weight of the electrode catalyst ink.

Next, a surface of a substrate is coated with the catalyst ink. A method of coating the substrate is not particularly limited, but a well-known method may be used. Specifically, a well-known method such as a spray (spray coat) method, a Gulliver printing method, a die coater method, a screen printing method, or a doctor blade method can be used.

As the substrate coated with the catalyst ink, a solid polymer electrolyte membrane (electrolyte layer) or a gas diffusion substrate (gas diffusion layer) may be used. In this case, after the catalyst layer is formed on a surface of a solid polymer electrolyte membrane (electrolyte layer) or a gas diffusion substrate (gas diffusion layer), the resultant laminate may be used as it is for manufacturing a membrane electrode assembly. Alternatively, as the substrate, a peelable substrate such as a polytetrafluoroethylene (PTFE) [Teflon (registered trademark)] sheet can be used, and after a catalyst layer is formed on the substrate, the catalyst layer portion can be peeled off from the substrate, so that the catalyst layer may be obtained.

Finally, the coat layer (film) of the catalyst ink is dried under an air ambience or under an inert gas ambience at a temperature ranging from room temperature to 150°C for a time ranging from 1 to 60 minutes. By this, the catalyst layer can be formed.

### [Membrane Electrode Assembly]

According to another embodiment of the present invention, provided is a membrane electrode assembly for a fuel cell including the above-described electrode catalyst layer for fuel cell. Namely, provided is a membrane electrode assembly for fuel cell which comprises a solid polymer electrolyte membrane 2, a cathode catalyst layer disposed on one side of the electrolyte membrane, an anode catalyst layer disposed on the other side of the electrolyte membrane, and a pair of gas diffusion layers (4a, 4c) interposing the electrolyte membrane 2, the anode catalyst layer 3a, and the cathode catalyst layer 3c. In the membrane electrode assembly, at least one of the cathode catalyst layer and the anode catalyst layer is the catalyst layer according to the embodiment described above. Therefore, in the membrane electrode assembly for fuel cell according to the embodiment, when the reaction gas is transported to the surfaces of the catalyst metals, the transport resistance is decreased.

However, by taking into consideration necessity of improved proton conductivity and improved transport characteristic (gas diffusibility) of a reaction gas (particularly, O₂), at least the cathode catalyst layer is preferably the catalyst layer according to the embodiment described above. However, the catalyst layer according to the embodiment is not particularly limited. The catalyst layer may be used as the anode catalyst layer or may be used as the cathode catalyst layer and the anode catalyst layer.

### [Fuel Cell]

According to further embodiment of the present invention, provided is a fuel cell including the membrane electrode assembly according to the embodiment. Namely, according to one aspect, the present invention provides a fuel cell comprising a pair of anode separator and cathode separator interposing the membrane electrode assembly according to the embodiment. In the fuel cell, the reaction-gas transport resistance to the surfaces of the catalyst metal can be decreased.

Hereinafter, members of a PEFC 1 using the catalyst layer according to the embodiment will be described with reference to Fig. 1. However, the present invention has features with respect to the catalyst. Therefore, among members constituting the fuel cell, specific forms of members other than the catalyst layer may be appropriately modified with reference to well-known knowledge in the art.

### (Electrolyte Membrane)

An electrolyte membrane is configured with a solid polymer electrolyte membrane 2 in the same form illustrated in, for example, Fig. 1. The solid polymer electrolyte membrane 2 serves to selectively transmit protons generated in an anode catalyst layer 3a to a cathode catalyst layer 3c in the thickness direction during the operation of the PEFC 1. In addition, the solid polymer electrolyte membrane 2 also serves as a partition wall for preventing a fuel gas supplied to an anode side from being mixed with an oxidant gas supplied to a cathode side.

An electrolyte material constituting the solid polymer electrolyte membrane 2 is not particularly limited, but well-known knowledge in the art may be appropriately referred to. For example, the fluorine-based polymer electrolyte or the hydrocarbon-based polymer electrolyte described above as the polymer electrolyte can be used. There is no need to use the polymer electrolyte which is necessarily the same as the polymer electrolyte used for the catalyst layer.

A thickness of the electrolyte layer is not particularly limited, but it may be determined by taking into consideration characteristics of the obtained fuel cell. The thickness of the electrolyte layer is typically in the range of about 5 to 300 µm. If the thickness of the electrolyte layer is within such a range, balance between strength during the film formation or durability during the use and output characteristics during the use can be appropriately controlled.

### (Gas Diffusion Layer)

A gas diffusion layer (anode gas diffusion layer 4a, cathode gas diffusion layer 4c) serves to facilitate diffusion of a gas (fuel gas or oxidant gas) supplied through a gas passage (6a, 6c) of a separator to a catalyst layer (3a, 3c) and also serves as an electron conducting path.

A material constituting a substrate of the gas diffusion layers (4a, 4c) is not particularly limited, but well-known knowledge in the related art may be appropriately referred to. For example, a sheet-shaped material having conductivity and porous property such as a fabric made of carbon, a sheet-shaped paper, felt, and a nonwoven fabric may be exemplified. A thickness of the substrate may be appropriately determined by considering characteristics of the obtained gas diffusion layer. The thickness of the substrate may be in the range of about 30 to 500 µm. If the thickness of the substrate is within such a range, balance between mechanical strength and diffusibility of gas, water, and the like can be appropriately controlled.

The gas diffusion layer preferably includes a water repellent for the purpose of preventing a flooding phenomenon or the like by improving water repellent property. The water repellent is not particularly limited, but fluorine-based polymer materials such as polytetrafluoroethylene (PTFE), polyvinylidene fluoride (PVdF), polyhexafluoropropylene, and tetrafluoroethylene-hexafluoropropylene copolymer (FEP), polypropylene, polyethylene, and the like may be exemplified.

In order to further improve water repellent property, the gas diffusion layer may include a carbon particle layer (microporous layer (MPL), not shown) configured with an assembly of carbon particles including a water repellent provided at the catalyst-layer side of the substrate.

Carbon particles included in the carbon particle layer are not particularly limited, but well-known materials in the art such as carbon black, graphite, and expandable graphite may be appropriately employed. Among the materials, due to excellent electron conductivity and a large specific surface area, carbon black such as oil furnace black, channel black, lamp black, thermal black, and acetylene black can be preferably used. An average particle diameter of the carbon particle may be set to be in the range of about 10 to 100 nm. By this, high water-repellent property by a capillary force can be obtained, and contacting property with the catalyst layer can be improved.

As the water repellent used for the carbon particle layer, the above-described water repellent may be exemplified. Among the materials, due to excellent water repellent property and excellent corrosion resistance during the electrode reaction, the fluorine-based polymer material can be preferably used.

A mixing ratio of the carbon particles and the water repellent in the carbon particle layer may be set to be in the range of weight ratio of about 90:10 to 40:60 (carbon particle: water repellent) by taking into consideration balance between water repellent property and electron conductivity. Meanwhile, a thickness of the carbon particle layer is not particularly limited, but it may be appropriately determined by taking into consideration water repellent property of the obtained gas diffusion layer.

### (Method of Manufacturing Membrane Electrode Assembly)

A method of manufacturing a membrane electrode assembly is not particularly limited, and a well-known method in the art may be used. For example, a method which comprises transferring a catalyst layer to a solid polymer electrolyte membrane by using a hot press, or coating a solid polymer electrolyte membrane with a catalyst layer and drying the coating, and joining the resulting laminate with gas diffusion layers, or a method which comprises coating a microporous layer (in the case of not including a microporous layer, one surface of a substrate layer) of a gas diffusion layer with a catalyst layer in advance and drying the resulting product to produce two gas diffusion electrodes (GDEs), and joining both surfaces of the solid polymer electrolyte membrane with the two gas diffusion electrodes by using a hot press can be used. The coating and joining conditions by hot press and the like may be appropriately adjusted according to a type of the polymer electrolyte (perfluorosulfonic acid-based or hydrocarbon-based) in the solid polymer electrolyte membrane or the catalyst layer.

### (Separator)

In the case of configuring a fuel cell stack by connecting a plurality of unit fuel cells of polymer electrolyte fuel cells in series, a separator serves to electrically connect the cells in series. The separator also serves as a partition wall for separating a fuel gas, an oxidant gas, and a coolant from each other. In order to secure a passage thereof, as described above, gas passages and coolant passages are preferably installed in each of the separators. As a material constituting the separator, well-known materials in the art of carbon such as dense carbon graphite and a carbon plate, a metal such as a stainless steel, or the like can be employed without limitation. A thickness or size of the separator, a shape or size of the installed passages, and the like are not particularly limited, but they can be appropriately determined by taking into consideration desired output characteristics and the like of the obtained fuel cell.

A manufacturing method for the fuel cell is not particularly limited, and well-known knowledge in the art in the field of fuel cell may be appropriately referred to.

Furthermore, in order that the fuel cell can generate a desired voltage, a fuel cell stack may be formed by connecting a plurality of membrane electrode assemblies in series through a separator. A shape and the like of the fuel cell are not particularly limited, and they may be appropriately determined so as to obtain desired cell characteristics such as a voltage.

The above-described PEFC or membrane electrode assembly uses the catalyst layer having excellent power generation performance and excellent durability. Therefore, the PEFC or membrane electrode assembly shows excellent power generation performance and durability.

The PEFC according to the embodiment and the fuel cell stack using the PEFC can be mounted on a vehicle, for example, as a driving power source.

### Example

The effects of the present invention will be described with reference to the following Examples and Comparative Examples.

### Synthesis Example 1

By the followings, a support a having an average pores radius of 6.1 nm, a pore volume of mesopores of 0.95 cc/g support, and a BET specific surface area of 1300 m²/g support was manufactured. Specifically, the support a was manufactured according to the method disclosed in JP-A-2010-208887 or the like.

### Synthesis Example 2

By the followings, a support b having an average pores radius of 2.1 nm, a pore volume of mesopores of 0.92 cc/g support, and a BET specific surface area of 1770 m²/g support was manufactured. Specifically, the support b was manufactured according to the method disclosed in WO 2009/75264 or the like.

### Synthesis Example 3

By the followings, a support c having an average pores radius of 2.4 nm, a pore volume of mesopores of 1.53 cc/g support, and a BET specific surface area of 1600 m²/g support was manufactured. Specifically, the support c was manufactured according to the method disclosed in JP-A-2010-208887 or the like.

### Synthesis Example 4

By the followings, a support d having an average pores radius of 2.4 nm, a pore volume of mesopores of 1.62 cc/g support, and a BET specific surface area of 1600 m²/g support was manufactured. Specifically, the support d was manufactured according to the method disclosed in JP-A-2010-208887 or the like.

### Example 1

### (a) Manufacturing of Catalyst Powder

The support A manufactured in Synthesis Example 1 described above was used, and platinum (Pt) having an average particle diameter of 3.4 nm as the catalyst metal was supported on the support at a support ratio of 30 wt%, to prepare a catalyst powder A. To be specific, 107 g of the support A is immersed into 1000 g of a dinitrodiammine platinum nitric acid solution having a platinum concentration of 4.6 wt% (platinum content: 46 g), and after stirring, 100 mL of 100% of ethanol as a reducing agent was added thereto. The resultant mixture was stirred and mixed at a boiling point for 7 hours, so that platinum was supported on the support A. Next, by filtering and drying, the catalyst powder having a support ratio of 30 wt% was obtained. After that, the resulting product was maintained in a hydrogen ambience at a temperature of 900°C for 1 hour, to yield a catalyst powder A.

### (b) Manufacturing of Membrane Electrode Assembly (MEA)

The catalyst powder A manufactured as described above and an ionomer dispersion liquid (Nafion (registered trademark) D2020, EW = 1100 g/mol, produced by DuPont) as the polymer electrolyte were mixed at a weight ratio of the carbon support and the ionomer of 0.9. Next, a cathode catalyst ink was prepared by adding a n- propanol solution (50%) as a solvent with a solid content (Pt + carbon support + ionomer) of 7 wt%.

Ketjen Black (particle diameter: 30 to 60 nm) was used as the support, and platinum (Pt) having an average particle diameter of 2.5 nm as the catalyst metal was supported thereon at a support ratio of 50 wt%, to obtain a catalyst powder. The catalyst powder and an ionomer dispersion liquid (Nafion (registered trademark) D2020, EW = 1100 g/mol, produced by DuPont) as the polymer electrolyte were mixed at a weight ratio of the carbon support and the ionomer of 0.9. Next, an anode catalyst ink was prepared by adding a n-propanol solution (50%) as a solvent with a solid content (Pt + carbon support + ionomer) of 7 wt%.

Next, a gasket (Teonex produced by Teijin DuPont, thickness: 25 µm (adhesive layer: 10 µm)) was arranged around both surfaces of a polymer electrolyte membrane (NAFION NR211 produced by DuPont, thickness: 25 µm). Then, an exposed portion of one surface of the polymer electrolyte membrane was coated with the catalyst ink having a size of 5 cm x 2 cm by a spray coating method. The catalyst ink was dried by maintaining the stage where the spray coating was performed at a temperature of 60°C for 1 minute, to obtain an electrode catalyst layer. At this time, a supported amount of platinum is 0.15 mg/cm². An inductively coupled plasma emission spectroscopy (ICP) was used for the measurement (determination) of the supported amount. Next, similarly to the cathode catalyst layer, the anode catalyst layer was formed by performing the spray coating and the heat treatment on the electrode membrane, to prepare a membrane electrode assembly (1) of this example.

### (c) Evaluation

With respect to the catalyst powder A and the membrane electrode assembly (1) manufactured as described above, the pore volume of mesopores, the specific surface area of the catalyst metal (platinum), the particle diameter of catalyst metal (platinum), the BET specific surface area, the water content, and the gas transport resistance were measured. The results are listed in the following Table 1. The measurement of the pore volume of mesopores and that of BET specific surface area were performed according to the above-described method, and the other evaluations were performed as follows.

### (Measurement of Specific Surface Area of Platinum)

With respect to the cathode catalyst layer manufactured as described above, an electrochemical effective surface area (ECA: Electrochemical surface area) was obtained by cyclic voltammetry. As a reference electrode, platinum was used; and as a counter electrode, a reference hydrogen electrode (RHE) was used.

### (Measurement of Particle Diameter of Platinum)

With respect to the catalyst powder A manufactured as described above, the particle diameter was obtained from a crystallite diameter obtained from a half-value width of a diffraction peak of a metal component in X-ray diffraction spectroscopy (XRD).

### (Measurement of Water Content)

The water content was obtained as [Water Content (vol%)] = [Volume of Adsorbed Water at Humidity of 90%]/[Total Pore Volume]. Specifically, the following operations were performed.

As the water content amount of catalyst (volume of adsorbed water), water vapor adsorption isotherm was measured, and the volume of adsorbed water per 1 g of support weight (unit: cc/g support) at humidity of 90% was used as a representative value. As preparation processes for the measurement of the water vapor adsorption isotherm, first, about 0.05 g of catalyst was inserted into a glass cell, and decompression and deaeration were performed at a temperature of 90°C for 5 hours as a pretreatment. Next, the measurement was performed under the following measurement condition.

### Measurement Condition

Temperature: 80°C
Measurement Time: for each relative humidity condition, 500 seconds after the weight reaches an equilibrium state.

The total pore volume was obtained as a sum of the "pore volume of mesopores" and the "pore volume of micropores". The "pore volume of mesopores" was calculated according to the above-described method. In addition, the "pore volume of micropores" denotes a total volume of micropores having a radius of less than 1 nm existing in the catalyst and is expressed by pore volume (cc/g support) per 1 g of support. The "pore volume of micropores (cc/g support)" is calculated as an area (integral value) under a differential pore distribution curve obtained according to a nitrogen adsorption method (MP method). In addition, as the measurement methods of the radius and pore volume of micropores in accordance with the nitrogen adsorption method (MP method), for example, methods disclosed in well-down literatures such as "Science of Adsorption" (second edition written by Kondo Seiichi, Ishikawa Tatsuo, and Abe Ikuo, Maruzen Co., Ltd.), "Fuel Cell Analysis Method" (compiled by Takasu Yoshio, Yoshitake Yu, and Ishihara Tatsumi of KAGAKU DOJIN), and an article by R. Sh. Mikhail, S. Brunauer, and E. E. Bodor in J. Colloid Interface Sci. , 26, 45 (1968) may be employed. In this description, the radius and pore volume of micropores in accordance with the nitrogen adsorption method (MP method) are values measured according to the method disclosed in the article written by R. Sh. Mikhail, S. Brunauer, and E. E. Bodor in J. Colloid Interface Sci., 26, 45 (1968).

### (Evaluation of Gas Transport Resistance)

With respect to the membrane electrode assembly (1) manufactured as described above, the evaluation of the gas transport resistance was performed according to the method disclosed in T.Mashio et al. ECS Trans. 11, 529, (2007). The results are listed in the following Table 1.

Namely, a limiting current density (A/cm²) was measured by using dilute oxygen. At this time, gas transport resistance (s/m) is calculated from a slope of the limiting current density (A/cm²) to a partial pressure (kPa) of oxygen. Next, while changing a total pressure of the gas, the gas transport resistance is calculated in the same manner. The gas transport resistance is proportional to a total pressure of the gas. The gas transport resistance can be divided into a component depending on the total pressure of the gas (gas transport resistance according to diffusion of molecules) and a component not depending on the total pressure of the gas. For example, the former is a transport resistance component in the pores having such a relatively large size as 100 nm or more existing in a gas diffusion layer or the like, and the latter is a transport resistance component in the pores having such a relatively small size as less than 100 nm existing in a catalyst layer or the like. In this manner, the total pressure dependency of the gas transport resistance was measured, and the component not depending on the total pressure was extracted, to obtain the gas transport resistance in a catalyst layer.

### Example 2

Except for using the support b manufactured in Synthesis Example 2 instead of the support a in Example 1, the same processes as those of Example 1 were performed, to prepare a catalyst powder B. A membrane electrode assembly (2) was manufactured by the same processes as those of Example 1, except that the catalyst powder B obtained as described above was used. With respect to the membrane electrode assembly (2) and the catalyst powder B obtained as described above, the pore volume of mesopores, the specific surface area of the catalyst metal (platinum), the particle diameter of catalyst metal (platinum), the BET specific surface area, the water content, and the gas transport resistance were measured. The results are listed in the following Table 1.

### Example 3

Except for further performing acid treatment on the catalyst powder B in Example 2, the same processes as those of Example 2 were performed, to prepare the catalyst powder C. The acid treatment was performed by immersing the catalyst powder B in 3.0 mol/L of an aqueous nitric acid solution at 80°C for 2 hours, and after that, by filtering and drying. A membrane electrode assembly (3) was manufactured by the same processes as those of the Example 2, except that the catalyst powder C obtained as described above was used. With respect to the membrane electrode assembly (3) and the catalyst powder C obtained as described above, the pore volume of mesopores, the specific surface area of the catalyst metal (platinum), the particle diameter of catalyst metal (platinum), the BET specific surface area, the water content, and the gas transport resistance were measured. The results are listed in the following Table 1.

### Example 4

Except for using the support c manufactured in Synthesis Example 3 instead of the support a in Example 1, the same processes as those of Example 1 were performed, to prepare a catalyst powder D. A membrane electrode assembly (4) was manufactured by the same processes as those of Example 1, except that the catalyst powder D obtained as described above was used. With respect to the membrane electrode assembly (4) and the catalyst powder D obtained as described above, the pore volume of mesopores, the specific surface area of the catalyst metal (platinum), the particle diameter of catalyst metal (platinum), the BET specific surface area, the water content, and the gas transport resistance were measured. The results are listed in the following Table 1.

### Example 5

Except for using the support d manufactured in Synthesis Example 4 instead of the support a in Example 1, the same processes as those of Example 1 were performed, to prepare a catalyst powder E. A membrane electrode assembly (6) was manufactured by the same processes as those of Example 1, except that the catalyst powder E obtained as described above was used. With respect to the membrane electrode assembly (6) and the catalyst powder E obtained as described above, the pore volume of mesopores, the specific surface area of the catalyst metal (platinum), the particle diameter of catalyst metal (platinum), the BET specific surface area, the water content, and the gas transport resistance were measured. The results are listed in the following Table 1.

### Comparative Example 1

Ketjen Black EC300J (Ketjen Black International) is calcined in an electric furnace under a nitrogen ambience at 2000°C for 1 hour. A graphite Ketjen Black (support e) (having a pore volume of mesopores of 0.15 cc/g support and a BET specific surface area of 150 m²/g support) obtained by the above processes was used, and platinum (Pt) having an average particle diameter of 2.3 nm as the catalyst metal was supported on the support at a support ratio of 50 wt%, to prepare a comparative catalyst powder F. To be specific, 46 g of the support e is immersed into 1000 g of a dinitrodiammine platinum nitric acid solution having a platinum concentration of 4.6 wt% (platinum content: 46 g), and after stirring, 100 mL of 100% of ethanol as a reducing agent was added thereto. The resultant mixture was stirred and mixed at a boiling point for 7 hours, so that platinum was supported on the support e. Next, by filtering and drying, the comparative catalyst powder F having a support ratio of 50 wt% was obtained.

A comparative membrane electrode assembly (1) was manufactured by the same processes as those of Example 1, except that the catalyst powder F obtained as described above was used. With respect to the comparative membrane electrode assembly (1) and the catalyst powder F obtained as described above, the pore volume of mesopores, the specific surface area of the catalyst metal (platinum), the particle diameter of catalyst metal (platinum), the BET specific surface area, the water content, and the gas transport resistance were measured. The results are listed in the following Table 1.

### Comparative Example 2

Except for using Ketjen Black EC300J (Ketjen Black International) (support f) (having a pore volume of mesopores of 0.39 cc/g support and a BET specific surface area of 790 m²/g support) as the support instead of the support e in Comparative Example 1, the same processes as those of Comparative Example 1 were performed, to obtain a comparative catalyst powder G. A comparative membrane electrode assembly (2) was manufactured by the same processes as those of Example 1, except that the comparative catalyst powder G obtained as described above was used. With respect to the comparative membrane electrode assembly (2) and the comparative catalyst powder G obtained as described above, the pore volume of mesopores, the specific surface area of the catalyst metal (platinum), the particle diameter of catalyst metal (platinum), the BET specific surface area, the water content, and the gas transport resistance were measured. The results are listed in the following Table 1.

### Comparative Example 3

Except for using the support a manufactured in Synthesis Example 1 in Comparative Example 1, the same processes as those of Comparative Example 1 were performed, to prepare a comparative catalyst powder H. A comparative membrane electrode assembly (3) was manufactured by the same processes as those of Example 1, except that the comparative catalyst powder H obtained as described above was used. With respect to the comparative membrane electrode assembly (3) and the catalyst powder H obtained as described above, the pore volume of mesopores, the specific surface area of the catalyst metal (platinum), the particle diameter of catalyst metal (platinum), the BET specific surface area, the water content, and the gas transport resistance were measured. The results are listed in the following Table 1.

### Comparative Example 4

Except for using the support c manufactured in Synthesis Example 3 in Comparative Example 1, the same processes as those of Comparative Example 1 were performed, to prepare a comparative catalyst powder I. A comparative membrane electrode assembly (4) was manufactured by the same processes as those of Example 1, except that the comparative catalyst powder I obtained as described above was used. With respect to the comparative membrane electrode assembly (4) and the catalyst powder I obtained as described above, the pore volume of mesopores, the specific surface area of the catalyst metal (platinum), the particle diameter of catalyst metal (platinum), the BET specific surface area, the water content, and the gas transport resistance were measured. The results are listed in the following Table 1.

### Comparative Example 5

Except for using the support f, and maintaining in a hydrogen ambience at a temperature of 900° for 1 hour in Comparative Example 1 after supporting platinum on the support, the same processes as those of Comparative Example 1 were performed, to prepare a comparative catalyst powder J. A comparative membrane electrode assembly (5) was manufactured by the same processes as those of Example 1, except that the comparative catalyst powder J obtained as described above was used. With respect to the comparative membrane electrode assembly (5) and the catalyst powder J obtained above, the pore volume of mesopores, the specific surface area of the catalyst metal (platinum), the particle diameter of catalyst metal (platinum), the BET specific surface area, the water content, and the gas transport resistance were measured. The results are listed in the following Table 1.

**[Table 1]**

| | Type of Support | Pore Volume of Mesopore (cc/g*¹) | Specific Surface Area of Platinum (m²/g*²) | Particle Diameter of Platinum (nm) | Catalyst Support Ratio (wt%) | BET Specific Surface Area (m²/g*²) | Water Content (vol%) | Gas Transport Resistance (s/m) |
|---|---|---|---|---|---|---|---|---|
| Example 1 | a | 0.81 | 18.4 | 3.4 | 30 | 1187 | 0.366 | 8.9 |
| Example 2 | b | 0.93 | 16.4 | 3.6 | 30 | 1753 | 0.128 | 1.1 |
| Example 3 | b | 0.90 | 14.6 | 3.7 | 30 | 1754 | 0.262 | 0.3 |
| Example 4 | c | 1.35 | 13.9 | 3.4 | 30 | 1478 | 0.159 | 5.0 |
| Example 5 | d | 1.54 | 13.4 | 3.4 | 30 | 1576 | 0.448 | 3.1 |
| Comparative Example 1 | e | 0.15 | 30.3 | 2.3 | 50 | 179 | 0.675 | 16.0 |
| Comparative Example 2 | f | 0.30 | 48.0 | 2.5 | 50 | 561 | 0.514 | 21.1 |
| Comparative Example 3 | a | 0.87 | 43.0 | 2.1 | 50 | 1137 | 0.646 | 22.5 |
| Comparative Example 4 | c | 1.14 | 53.0 | 2.3 | 50 | 1302 | 0.476 | 10.3 |
| Comparative Example 5 | f | 0.36 | 31.2 | 4.5 | 50 | 711 | 0.450 | 17.1 |

| | | | | | | | | |
|---|---|---|---|---|---|---|---|---|
| * 1: Unit of pore volume is cc/g support. * 2: Unit of specific surface area of platinum and unit of BET specific surface area are m²/g support. | | | | | | | | |

From the above Table 1, the catalyst powders A to E (Examples 1 to 5) according to the embodiment, which have the pore volume of mesopores 0.8 cc/g support or more and the specific surface area of platinum of 30 m²/g support or less, exhibited a good gas transportability such that the gas transport resistance is 9 s/m or less. Simultaneously, in the catalysts A to E (Examples 1 to 5) according to the embodiment, the water content of the catalyst is lowered, and thus, it is shown that, in the catalysts A to E, the surfaces of the catalysts are relatively water-repellent. Therefore, it is also considered from this result that, in the catalysts according to the embodiment, by setting the specific surface area of catalyst metal to be relatively small, the amount of water adsorbed to the hydrophilic surfaces of catalyst metal is reduced, so that the gas transportability is improved.

In addition, it is found out from the comparison with Comparative Example 2 and Comparative Example 5 that, by performing the heat treatment under a reductive ambience after supporting catalyst metal (platinum) on the support, the particle diameter of catalyst metal can be increased.

### Description of Reference Signs

- 1: Polymer electrolyte fuel cell (PEFC),
- 2: Solid polymer electrolyte membrane,
- 3: Catalyst layer,
- 3a: Anode catalyst layer,
- 3c: Cathode catalyst layer,
- 4a: Anode gas diffusion layer,
- 4c: Cathode gas diffusion layer,
- 5: Separator,
- 5a: Anode separator,
- 5c: Cathode separator,
- 6a: Anode gas passage,
- 6c: Cathode gas passage,
- 7: Coolant passage,
- 10: Membrane electrode assembly (MEA),
- 20: Catalyst,
- 22: Catalyst metal,
- 23: Catalyst Support,
- 24: Mesopore,
- 26: Electrolyte.

## Claims

1. An electrode catalyst layer for a fuel cell comprising a catalyst comprising a catalyst support and a catalyst metal supported on the catalyst support, and an electrolyte, wherein:
the catalyst is coated with the electrolyte, **characterised in that** the catalyst includes pores having a radius of 1 nm or more and less than 5 nm,
a pore volume of the pores is 0.8 cc/g support or more,
and
the catalyst metal is supported in the pore; wherein the catalyst metal has a specific surface area of 5 to 30 m²/g support, the specific surface area being measured by cyclic voltammetry using platinum as a reference electrode and a reference hydrogen electrode as counter electrode.

2. The electrode catalyst layer for a fuel cell according to claim 1, wherein an average particle diameter of the catalyst metal is more than 3 nm.

3. The electrode catalyst layer for a fuel cell according to claim 1 or 2, wherein a ratio of the catalyst metal to the catalyst is 40 wt% or less.

4. The electrode catalyst layer for a fuel cell according to any one of claims 1 to 3, wherein the catalyst has a BET specific surface area of 1500 m²/g support or more.

5. The electrode catalyst layer for a fuel cell according to any one of claims 1 to 4, wherein the catalyst metal is platinum or includes platinum and a metal component other than platinum.

6. The electrode catalyst layer for a fuel cell according to any one of claims 1 to 5, wherein the catalyst has a BET specific surface area of 1800 m²/g support or less.

7. The electrode catalyst layer for a fuel cell according to any one of claims 1 to 6, wherein the catalyst metal has a specific surface area of from 10 to 20 m²/g support

8. A membrane electrode assembly for fuel cell comprising the electrode catalyst layer for fuel cell set forth in any one of claims 1 to 7.

9. A fuel cell comprising the membrane electrode assembly for fuel cell set forth in claim 8.

## Patentansprüche

1. Elektrodenkatalysatorschicht für eine Brennstoffzelle umfassend einen Katalysator umfassend einen Katalysatorträger und ein auf dem Katalysatorträger aufgetragenes Katalysatormetall, und einen Elektrolyten, wobei:
der Katalysator mit dem Elektrolyten beschichtet ist,
**dadurch gekennzeichnet, dass** der Katalysator Poren mit einem Radius von 1 nm oder mehr und weniger als 5 nm einschließt,
ein Porenvolumen der Poren 0,8 cm³/g Träger oder mehr beträgt, und
das Katalysatormetall in der Pore aufgetragen ist;
wobei das Katalysatormetall eine spezifische Oberfläche von 5 bis 30 m²/g Träger aufweist, wobei die spezifische Oberfläche durch zyklische Voltammetrie unter Verwendung von Platin als eine Referenzelektrode und einer Referenz-Wasserstoffelektrode als Gegenelektrode gemessen wird.

2. Elektrodenkatalysatorschicht für eine Brennstoffzelle gemäß Anspruch 1, wobei ein mittlerer Partikeldurchmesser des Katalysatormetalls mehr als 3 nm beträgt.

3. Elektrodenkatalysatorschicht für eine Brennstoffzelle gemäß Anspruch 1 oder 2, wobei ein Verhältnis des Katalysatormetalls zu dem Katalysator 40 Gew.-% oder weniger beträgt.

4. Elektrodenkatalysatorschicht für eine Brennstoffzelle gemäß einem der Ansprüche 1 bis 3, wobei der Katalysator eine spezifische BET-Oberfläche von 1500 m²/g Träger oder mehr aufweist.

5. Elektrodenkatalysatorschicht für eine Brennstoffzelle gemäß einem der Ansprüche 1 bis 4, wobei das Katalysatormetall Platin ist oder Platin und eine andere Metallkomponente als Platin einschließt.

6. Elektrodenkatalysatorschicht für eine Brennstoffzelle gemäß einem der Ansprüche 1 bis 5, wobei der Katalysator eine spezifische BET-Oberfläche von 1800 m²/g Träger oder weniger aufweist.

7. Elektrodenkatalysatorschicht für eine Brennstoffzelle gemäß einem der Ansprüche 1 bis 6, wobei das Katalysatormetall eine spezifische Oberfläche von 10 bis 20 m²/g Träger aufweist.

8. Membranelektrodenanordnung für eine Brennstoffzelle umfassend die Elektrodenkatalysatorschicht für eine Brennstoffzelle, die in einem der Ansprüche 1 bis 7 dargelegt ist.

9. Brennstoffzelle umfassend die Membranelektrodenanordnung für eine Brennstoffzelle, die in Anspruch 8 dargelegt ist.

## Revendications

1. Couche de catalyseur d'électrode pour une pile à combustible comprenant un catalyseur comprenant un support de catalyseur et un catalyseur métallique supporté sur le support de catalyseur, et un électrolyte, dans laquelle :
le catalyseur est recouvert de l'électrolyte,
**caractérisée en ce que**
le catalyseur comprend des pores ayant un rayon de 1 nm ou plus et de moins de 5 nm,
un volume de pores des pores est de 0,8 cc/g de support ou plus,
et
le catalyseur métallique est supporté dans le pore ;
dans laquelle
le métal catalyseur a une aire de surface spécifique de 5 à 30 m²/g de support, l'aire de surface spécifique étant mesurée par voltamétrie cyclique en utilisant du platine comme électrode de référence et une électrode d'hydrogène de référence en tant que contre-électrode.

2. Couche de catalyseur d'électrode pour une pile à combustible selon la revendication 1, dans laquelle un diamètre de particule moyen du catalyseur métallique est supérieur à 3 nm.

3. Couche de catalyseur d'électrode pour une pile à combustible selon la revendication 1 ou 2, dans laquelle un rapport du catalyseur métallique sur le catalyseur est de 40 % en poids ou moins.

4. Couche de catalyseur d'électrode pour une pile à combustible selon l'une quelconque des revendications 1 à 3, dans laquelle le catalyseur a une aire de surface spécifique BET de 1 500 m²/g de support ou plus.

5. Couche de catalyseur d'électrode pour une pile à combustible selon l'une quelconque des revendications 1 à 4, dans laquelle le catalyseur métallique est du platine ou comprend du platine et un composant métallique autre que le platine.

6. Couche de catalyseur d'électrode pour une pile à combustible selon l'une quelconque des revendications 1 à 5, dans laquelle le catalyseur a une aire de surface spécifique BET de 1 800 m²/g de support ou plus.

7. Couche de catalyseur d'électrode pour une pile à combustible selon l'une quelconque des revendications 1 à 6, dans laquelle le catalyseur métallique a une aire de surface spécifique de 10 à 20 m²/g de support.

8. Ensemble d'électrodes à membrane pour pile à combustible comprenant la couche de catalyseur d'électrode pour pile à combustible selon l'une quelconque des revendications 1 à 7.

9. Pile à combustible comprenant l'ensemble d'électrodes à membrane pour pile à combustible selon la revendication 8.
